(19) Europäisches Patentamt
European Patent Office
Office européen des brevets

(11) **EP 2 589 690 A2**

(12) **EUROPEAN PATENT APPLICATION**
published in accordance with Art. 153(4) EPC

(43) Date of publication:
**08.05.2013 Bulletin 2013/19**

(51) Int Cl.:
***D01F 6/62*** (2006.01)     ***D01F 1/02*** (2006.01)

(21) Application number: **11801155.0**

(22) Date of filing: **30.06.2011**

(86) International application number:
**PCT/KR2011/004804**

(87) International publication number:
**WO 2012/002749 (05.01.2012 Gazette 2012/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2010 KR 20100063022**

(71) Applicant: **Kolon Industries, Inc.**
**Gwacheon-si, Gyeonggi-do 427-709 (KR)**

(72) Inventors:
• **KIM, Young-Jo**
**Gimpo-si**
**Gyeonggi-do 415-060 (KR)**
• **KIM, Gi-Woong**
**Daegu 706-020 (KR)**
• **AN, Byoung-Wook**
**Incheon 407-765 (KR)**
• **LEE, Sang-Mok**
**Gumi-si**
**Gyeongsangbuk-do 730-020 (KR)**
• **LEE, Young-Soo**
**Gumi-si**
**Gyeongsangbuk-do 730-030 (KR)**

(74) Representative: **TER MEER - STEINMEISTER & PARTNER GbR**
**Mauerkircherstraße 45**
**DE-81679 München (DE)**

(54) **POLYESTER FIBER AND METHOD FOR PREPARING SAME**

(57) This disclosure relates to high strength polyester fiber for industrial application such as a seat belt, webbing and the like, particularly to polyester fiber having elongation of 0.4% or more at stress of 1.0 g/d, elongation of 3.5% or more at stress of 4.0 g/d, and elongation of 6.0% or more at stress of 7.0 g/d, as measured at room temperature, and a method for manufacturing the same.

The polyester fiber according to the present invention has high strength, low modulus and high elongation thereby securing excellent mechanical properties, and thus, a seat belt having excellent impact absorption rate, and remarkably improved abrasion resistance and heat resistant breaking strength retention may be manufactured.

FIG. 1

EP 2 589 690 A2

**Description**

[TECHNICAL FIELD]

The present invention relates to high strength polyester fiber for industrial application such as a seat belt, and the like.. More specifically, the present invention relates to a polyester fiber of high strength and low modulus, which has excellent mechanical properties, abrasion resistance, heat resistant breaking strength retention, impact absorption rate, and the like, and a method for manufacturing the same.

[BACKGROUND ART]

Polyester represented by polyethyleneterephthalate (hereinafter, referred to as "PET") is widely used for fiber, a film or resin, and the like due to the excellent mechanical strength, chemical resistance, and the like. For example, the fiber is widely used for industrial materials, for example, rubber reinforcement material such as a tire cord, a belt, a hose, and the like, as well as medical application.

Currently, among the polyester fiber for industrial material, high strength polyester fiber including polyethyleneterephthalate as a main ingredient is widely used as yam for a seat belt. The yam for a seat belt should maintain high strength, and it should also have good sliding efficiency after manufactured into a seat belt so as to sharply decrease repeated frictions with a sash guide, and frictions generated when the seat belt is taken out and housed for attachment and detachment.

To afford sufficient sliding efficiency to polyester fiber for a seat belt, in general, an emulsion containing a lubricant was provided when manufacturing polyester fiber. However, since polyester fiber for a seat belt is not colored, a dyeing process is required after weaving, and the lubricant-containing emulsion provided in the yam manufacturing process may be eliminated during the dyeing process. For this reason, it is difficult to afford sufficient lubricity to polyester fiber for a seat belt only by providing a lubricant during a manufacturing process.

And, in general, if conventional polyester fiber for a seat belt is subjected to processes of manufacturing a webbing product and dyeing, the strength may be lowered due to high temperature heat treatment, and thus, technology has been developed toward increasing strength of the yam. Since yam for a seat belt basically functions for fixing a passenger to a car body and reducing secondary damage to protect the passenger when a car accident occurs, it is very important to maintain strength of the yam. However, if polyester fiber with high modulus and low elongation at breakting is used for yam for a seat belt, sliding efficiency for reducing frictions generated when the seat belt is mounted in an automobile and used may be remarkably lowered, and it may cause injury to a passenger when a car crashes due to stiffness of the seat belt itself.

Accordingly, there is a demand for development of high strength polyester fiber for industrial application such as a seat belt, and the like, which maintains excellent mechanical properties and high strength, and has remarkably improved flexibility, abrasion resistance, and breaking strength retention, and the like to reduce impact to a passenger.

[CONTENTS OF THE INVENTION]

[PROBLEMS TO BE SOLVED]

It is an object of the present invention to provide polyester fiber that exhibits high strength, low modulus, and high elongation so as to be usable for a seat belt, webbing, and the like, minimizes secondary damage due to stiffness of a seat belt itself when an accident occurs, and has excellent mechanical properties, abrasion resistance, and breaking strength retention.

It is another object of the present invention to provide a method for manufacturing the polyester fiber.

[TECHNICAL MEANS]

The present invention provides polyester fiber having elongation of 0.4% or more at stress of 1.0 g/d, elongation of 3.5% or more at stress of 4.0 g/d, and elongation of 6.0% or more at stress of 7.0 g/d, as measured at room temperature.

The present invention also provides a method for manufacturing the polyester fiber comprising: melt spinning polyester polymer having intrinsic viscosity of 1.0 dl/g or more at 270 to 310 °C to prepare undrawn polyester yam, and drawing the undrawn polyester yarn.

Hereinafter, polyester fiber and a manufacturing method thereof according to specific embodiments of the invention will be explained in detail. However, these are only to illustrate the invention, the scope of the right of the invention not limited thereto, and various modifications to the embodiments would be obvious to one of ordinary knowledge in the art within the scope of the right of the invention.

And, unless specifically indicated herein, "comprising" or "containing" refers to include any constitutional element (or constitutional ingredient) without specific limitations, and it should not be interpreted as excluding the addition of other constitutional elements (or constitutional ingredients).

In general, as yam for a seat belt, high strength polyester fiber including polyethyleneterephthalate (hereinafter, referred to as "PET") as a main ingredient is widely used. And, the yam for a seat belt should maintain high strength, and simultaneously have good sliding efficiency so as to remarkably decrease repeated frictions during attachment/detachment when it is mounted on an automobile and used.

Since the seat belt should function for fixing a passenger to a car body and reducing secondary damage to protect the passenger when a car accident occurs, it is designed as high strength yam, and thus, polyester fiber with high modulus and low elongation at break is mainly used. Particularly, polyester has higher stiffness compared to nylon, and the like, due to the molecular structure, and thus, has high modulus property.

However, if the high modulus polyester fiber with high stiffness is used to manufacture a seat belt, it may cause injury to the passenger due to the excessive stiffness of the seat belt when a car crashes.

Accordingly, the present invention optimizes elongation range of monofilament included in polyester fiber, so that it may be effectively applied for manufacturing of a seat belt having excellent impact absorption rate, and remarkably improved abrasion resistance and heat resistant breaking strength retention while maintaining high strength.

As the result of experiments, it was found out that when polyester fiber having specific properties is used to manufacture a seat belt, more improved sliding property and impact absorption rate, and the like may be secured together with excellent mechanical properties.

According to one embodiment of the invention, there is provided polyester fiber having specific properties. The polyester fiber may have elongation of 0.4% or more at stress of 1.0 g/d, elongation of 3.5% or more at stress of 4.0 g/d, and elongation of 6.0% or more at stress of 7.0 g/d, as measured at room temperature.

The polyester fiber may preferably include polyethyleneterephthalate (PET) as a main ingredient. During the manufacturing process of PET, various additives may be added, and to secure excellent mechanical properties when manufacturing a seat belt, the PET may be included in the content of 70 mol% or more, more preferably 90 mol% or more. Hereinafter, the polyethyleneterephthalate (PET) refers to including 70 mol% or more polyethyleneterephthalate (PET) polymer.

The polyester fiber according to one embodiment of the invention is manufactured under melt spinning and drawing conditions as described below, thus exhibiting elongation of 0.4% or more at stress of 1.0 g/d, elongation of 3.5% or more at stress of 4.0 g/d, and elongation of 6.0% or more at stress of 7.0 g/d, as measured at room temperature.

The existing polyester generally has a molecular structure with high stiffness, and thus, exhibits high modulus property, and remarkably lowered impact absorption rate and sliding property when manufactured into a seat belt. However, the polyester fiber obtained through controlled melt spinning and drawing processes exhibits high strength low modulus properties, and lower initial modulus than previously known polyester yam for industrial application. Particularly, the polyester fiber may exhibit initial modulus of 40 to 100 g/d, preferably 50 to 100 g/d, more preferably 55 to 95 g/d. Also, the polyester fiber of the present invention has minimized elongation. Namely, the polyester fiber may elongate 0.4% or more or 0.4% to 1.8%, preferably 0.7% or more or 0.7% to 1.5% when the polyester yam is subjected to stress of 1.0 g/d, it may elongate 3.5% or more or 3.5% to 20%, preferably 4.0% or more or 4.0% to 18% when subjected to stress of 4.0 g/d, and it may elongate 6.0% or more or 6.0% to 25%, preferably 7.0% or more or 7.0% to 20% when subjected to stress of 7.0 g/d. Due to the low initial modulus and low elongation properties, the polyester fiber may overcome problems of low abrasion resistance and lowered impact absorption rate, and the like, of a seat belt including the existing fiber with high modulus and low elongation at break, and it may exhibit more improved abrasion resistance, breaking strength retention, and the like together with excellent mechanical properties.

The polyester fiber may have Young's modulus, as measured by ASTM D 885, of 60 to 100 g/de, preferably 75 to 95 g/de at 1% elongation, namely at a point where it elongates 1%, and it may have Young's modulus of 20 to 60 g/de, preferably 22 to 55 g/de at 2% elongation, namely at a point where it elongates 2%. Compared to the existing polyester fiber for industrial application having Young's modulus of 110 g/de or more at 1% elongation, and Young's modulus of 80 g/de or more at 2% elongation, the polyester yam of the present invention has remarkably low modulus.

The Young's modulus of the polyester fiber is the property value of elastic modulus, which is calculated from the slope of the elastic section of a stress-strain curve obtained from tensile test, and it corresponds to modulus of elasticity showing the degree of stretching and the degree of strain of an object, when both sides of the object are lengthened out. If the modulus of the fiber is high, the fiber has good elasticity but is vulnerable to fatigue, thus, properties may be lowered when used for a long time, and it may cause damage to a seat belt itself due to excessive stiffness when an accident occurs. If the modulus is too low, the seat belt may not function for holding a passenger when an accident occurs, and thus, secondary damage of hitting inside of the car may be generated. As such, a seat belt manufactured from polyester fiber having low range of initial modulus compared to the existing fiber may minimize secondary damage due to stiffness of the seat belt itself when an accident occurs, which is generated in the existing seat belt, and it may also minimize degradation of properties due to use for a long time. Particularly, the polyester fiber of the present invention may overcome problems of the existing fiber of failing to hold a passenger when an accident occurs because it does not satisfy optimum property range required for seat belt application due to use for a long time, and it may exhibit more improved abrasion resistance, breaking strength retention, and the like together with excellent mechanical properties.

At the same time, the polyester fiber may exhibit more improved intrinsic viscosity compared to previously known polyester fiber, namely, intrinsic viscosity of 0.8 dl/g of more or 0.8 dl/g to 1.2 dl/g, preferably 0.85 dl/g or more or 0.85 dl/g to 1.15 dl/g, more preferably 0.90 dl/g or more or 0.90 dl/g to 1.10 dl/g. The intrinsic viscosity may be preferably secured in the above range so as to exhibit sufficient toughness when the polyester fiber is used to manufacture a seat belt.

Particularly, if the intrinsic viscosity of the yam is 0.8 dl/g or more, it may exhibit high strength at low draw ratio thus satisfying strength required as a seat belt. Otherwise, properties would be exhibited at high draw ratio. If high draw ratio is applied, orientation of fiber increases to obtain high modulus property. Thus, it may be preferable to maintain the intrinsic viscosity of the yam to 0.8 dl/g or more to apply low draw ratio so as to manifest low modulus. And, if the intrinsic viscosity of the polyester fiber is greater than 1.2 dl/g, draw tension increases during a drawing process to generate problems in the process, and thus, the intrinsic viscosity may be preferably 1.2 dl/g or less. Particularly, the polyester fiber of the present invention maintains the high degree of intrinsic viscosity, thereby securing high strength property so as to support a passenger with sufficient strength when car crashes, and simultaneously affording more improved impact absorption rate at low draw ratio.

Thus, using the polyester fiber exhibiting low initial modulus and high elongation, preferably high intrinsic viscosity, a seat belt or webbing product exhibiting excellent mechanical properties, abrasion resistance, heat resistant breaking strength retention, and impact absorption rate may be manufactured. Therefore, using the polyester fiber, thermal strain and strength lowering may be remarkably decreased in the manufacturing process of a seat belt, to secure excellent mechanical properties and breaking strength retention, and simultaneously minimize impact applied to a passenger due to the seat belt itself to protect the passenger safely.

Meanwhile, the polyester fiber according to one embodiment of the invention may exhibit tensile strength of 8.8 g/d or more or 8.8 g/d to 11.0 g/d, preferably 9.0 g/d or more or 9.0 g/d to 10.0 g/d, and elongation at break of 13% or more or 13% to 27 %, preferably 14% or more or 14% to 25%. And, the polyester fiber may exhibit dry heat shrinkage of 9% or less or 1.5% to 8%, preferably 8% or less or 2% to 8%. The dry heat shrinkage is measured under condition adding constant load of 0.01 g/d at 177 °C for 2 minutes.

As explained above, by securing optimum range of intrinsic viscosity, initial modulus, elongation, and the like, the polyester fiber of the present invention may secure excellent strength and properties, and exhibit excellent performance in terms of abrasion resistance and heat resistant breaking strength retention, and the like, when manufactured into a seat belt.

The polyester fiber may have single yam fineness of 8.0 DPF or more or 8.0 to 20 DPF, preferably 8.5 DPF or more or 8.5 to 18 DPF. Since the yam should maintain low fineness and high strength in terms of the thickness of a seat belt and Module mounting so that it may be effectively used for a seat belt or webbing product, total fineness of the applicable yam may be 400 to 1,800 denier, preferably 500 to 1,700 denier. Although the yam may afford softer feel as the number of filaments is larger, if the number is too large, spinning property is not good, and thus, the number of filaments may be 50 to 240, preferably 55 to 220.

The polyester fiber may have crystallinity of 43% to 50%, preferably 44% to 49%, more preferably 44% to 48% so as to prevent strain during a heat treatment process such as coating, and the like. The crystallinity of the yam may be 40% or more so as to maintain thermal stability when applied for seat belt fabric, and if the crystallinity is greater than 55%, non-crystalline regions may decrease to lower impact absorption rate, and thus, it may be preferably 55% or less.

And, the polyester fiber may further include additives so as to prevent damage to the yam when spinning, improve friction resistance of the yam, and minimize lowering of strength. Particularly, the polyester fiber may include a least one inorganic additive selected from the group consisting of $TiO_2$, $SiO_2$, $BaSO_4$, and the like. The inorganic additive may be included in the content of 100 to 1,200 ppm, preferably 200 to 1,000 ppm, based on the polyester fiber. The inorganic additive may be included in the content of 100 ppm or more, preferably 200 ppm or more, so as to achieve effective stainability and minimize damage to the yam during a drawing process. And, the inorganic additive may be preferably included in the content of 1,200 ppm or less, preferably 1,000 ppm or less, so as to improve spinning property of the fiber and secure excellent mechanical properties of the yarn.

Meanwhile, the polyester fiber according to one embodiment of the invention may be manufactured by melt spinning polyester polymer to prepare undrawn yam, and drawing the undrawn yam, and as described above, specific conditions or method of each step may directly/indirectly affect the properties of polyester fiber, to manufacture polyester fiber having the above explained properties.

Particularly, it was found out that through the process optimization, polyester fiber having elongation of 0.4% or more at stress of 1.0 g/d, elongation of 3.5% or more at stress of 4.0 g/d, and elongation of 6.0% or more at stress of 7.0 g/d, as measured at room temperature, may be obtained. Thus, the polyester fiber simultaneously exhibits low initial modulus and high elongation range, and thus, may be preferably applied for a seat belt or webbing product having excellent mechanical properties, abrasion resistance, breaking strength retention, and impact absorption rate.

Hereinafter, a method for manufacturing the polyester fiber will be explained in detail according to each step.

The method for manufacturing the polyester fiber includes melt spinning polyester polymer having intrinsic viscosity of 1.0 dl/g or more at 270 to 310 °C to prepare undrawn polyester yam, and drawing the undrawn polyester yam.

First, referring to the attached drawings, melt spinning and drawing processes of the present invention will be briefly explained so that one of ordinary knowledge in the art may easily work it.

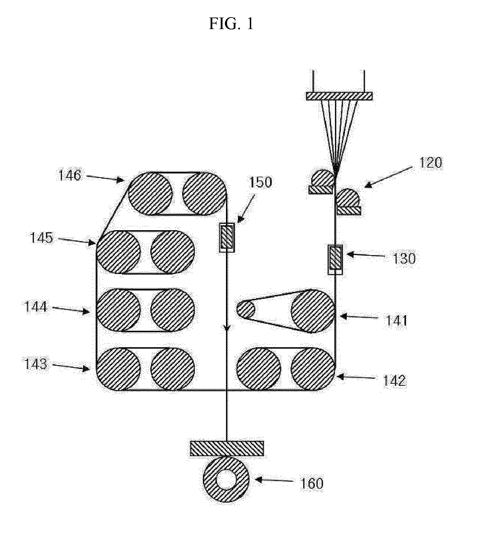

Fig. 1 schematically shows a process for manufacturing polyester fiber including melt spinning and drawing steps, according to one embodiment of the invention. As shown in Fig. 1, according to the manufacturing method of polyester fiber of the present invention, polyester chip prepared by the above explained method is molten, the molten polymer spinned through a spinner is cooled with quenching-air, an emulsion is provided to undrawn yam using an emulsion roll(120) (or oil-jet), the emulsion provided to the undrawn yam is uniformly dispersed on the surface of the yam with constant air pressure using a pre-interlacer(130). Then, a drawing process is conducted through multi-staged drawing machine(141~146), and finally, the yam is intermingled with constant pressure in a 2nd Interlacer(150) and winded in a winder(160) to produce yam.

First, the manufacturing method of the present invention melt spins high viscosity polymer including polyethyleneterephthalate to prepare undrawn polyester yam.

At this time, to obtain undrawn polyester yam satisfying low initial modulus and high elongation range, the melt spinning process may be preferably conducted at low temperature range so as to minimize thermal decomposition of the polyester polymer. Particularly, spinning may be conducted at low temperature, for example, at 270 to 310 degrees Celsius (°C), preferably 280 to 305 °C, more preferably 282 to 298 °C, so as to minimize degradation of properties of intrinsic viscosity and CEG content, and the like of high viscosity polyester polymer, namely, maintain high intrinsic viscosity and low CEG content of polyester polymer. The spinning temperature refers to the temperature of and extruder, and if the melt spinning is conducted at temperature greater than 310 °C, thermal decomposition of the polyester polymer may be generated a lot, and thus, intrinsic viscosity may be lowered to decrease molecular weight and increase CEG content, and general property degradation may be caused due to surface damage of the yam. Meanwhile, if the melt spinning is conducted at a temperature less than 270 °C, it may be difficult to melt the polyester polymer, and spinning property may be lowered due to N/Z surface cooling. Thus, the melt spinning process may be preferably conducted in the above temperature range.

The polyester polymer may preferably include polyethyleneterephthalate (PET) as a main ingredient. The polyethyleneterephthalate (PET) may be included in the content of 70 mol% or more, preferably 90 mol% or more, so as to secure excellent mechanical properties when manufactured into a seat belt.

And, the polyester polymer may further include at least one inorganic additive selected from the group consisting of $TiO_2$, $SiO_2$, $BaSO_4$, and the like. The inorganic additive may be included in the content of 100 to 1,200 ppm, preferably 200 to 1,000 pm, based on the polyester polymer. The details of the inorganic additive are as explained above.

As the result of experiments, it was found out that by progressing melt spinning of PET at the low temperature range to minimize decomposition of polyester polymer and maintain high intrinsic viscosity thus securing high molecular weight, high strength yam may be obtained without applying high draw rate in the subsequent drawing process, and because a low draw ratio process may be conducted, modulus may be effectively lowered and polyester satisfying the above explained properties may be obtained.

And, in the melt spinning process, the melt spinning speed of the polyester polymer may be controlled to low speed of 300 to 1,000 m/min, preferably 350 to 700 m/min, so as to progress under lower spinning tension, namely minimize spinning tension, to minimize decomposition of the polyester polymer.

Meanwhile, the undrawn yam obtained by the melt spinning process may exhibit intrinsic viscosity of 0.8 dl/g or more or 0.8 dl/g to 1.2 dl/g, preferably 0.85 dl/g to 1.15 dl/g, more preferably 0.90 dl/g to 1.10 dl/g.

Particularly, as explained above, to manufacture high strength low modulus polyester fiber, it may be preferable to use high viscosity polyester polymer, for example polyester polymer with intrinsic viscosity of 1.0 dl/g or more in the manufacturing process of undrawn yam, and maximally maintain the high viscosity range through melt spinning and drawing processes, to manifest high strength at low draw ratio to effectively lower modulus. However, to prevent cutting of molecular chain due to increase in melting temperature of the polyester polymer, and pressure increase due to discharge rate in the spinning pack, intrinsic viscosity may be preferably 2.0 dl/g or less.

And, the PET chip may be preferably spinned through a spinner designed such that the fineness of monofilament may become 8.0 DPF or more or 8.0 to 20 DPF, preferably 8.5 DPF or more or 8.5 to 18 DPF. Namely, to lower the possibility of yam cutting during spinning and yam cutting due to interference during cooling, denier of monofilament may be preferably 8.0 DPF or more, and to increase cooling efficiency, fineness of monofilament may be more preferably 20 DPF or less.

And, after melt spinning the PET, a cooling process may be additionally conducted to manufacture the undrawn PET yam. The cooling process may be preferably progressed by adding cooling air of 15 to 60 °C, and the cooling air volume may be preferably controlled to 0.4 to 1.5 m/s. Thereby, undrawn PET yam exhibiting all the properties according to one embodiment of the invention may be more easily manufactured.

Meanwhile, after manufacturing polyester undrawn yam through the spinning, the undrawn yam is drawn to manufacture drawn yam. The drawing process may be conducted at total draw ratio of 5.0 to 6.5, preferably 5.0 to 6.2. The polyester undrawn yam maintains high intrinsic viscosity and low initial modulus by optimization of the melt spinning process. Thus, if the drawing process is progressed at high draw ratio greater than 6.5, excessive drawing may occur to generate yam cutting or pilling, and yam with low elongation and high modulus may be manufactured due to high fiber orientation degree. Particularly, in case elongation of the yam is lowered and modulus is increased under high draw ratio condition, abrasion resistance and heat resistant breaking strength retention, and the like may not be good when applied for a seat belt, and the like. To the contrary, if a drawing process is progressed under relatively low draw ratio, fiber orientation degree may be low, and thus, the strength of polyester fiber prepared therefrom may be partially lowered. However, if a drawing process is progressed under draw ratio of 5.0 or more, high strength low modulus polyester fiber suitable for application for a seat belt, and the like may be manufactured. Thus, the drawing process may be preferably progressed under draw ratio of 5.0 to 6.5.

According to another embodiment of the invention, to manufacture low modulus polyester fiber simultaneously satisfying high strength and low shrinkage by direct spinning drawing, high viscosity polyethyleneterephthalate polymer chip is melt-spinned, and then, passed through a multi-staged godet roller, and subjected to drawing, heat setting, relaxing and winding until winded in a winder.

The drawing process may be conducted after the undrawn yam is passed through a godet roller under oil pick amount of 0.2% to 2.0%.

In the relaxing process, relaxation rate may be preferably 1% to 14%, and if it is less than 1%, shrinkage may not be achieved, and it may be difficult to manufacture high elongation low modulus fiber due to high fiber orientation, like under high draw ratio, and if it is greater than 14%, vibration of yam may become serious on the godet roller and thus operability may not be secured.

And, in the drawing process, a heat setting process for heat treating the undrawn yam at approximately 170 to 250 °C may be further conducted, and preferably, to appropriately progress the drawing process, it may be conducted at 175 to 240 °C, more preferably 180 to 245 °C. If the temperature is less than 170 °C, thermal effect may not be sufficient to lower relaxation efficiency, and thus, shrinkage may not be achieved, and if it is greater than 250 °C, yam strength may be lowered due to thermal decomposition and a lot of tar may be generated on the roller, and thus, operability may be lowered.

The winding speed may be 2,000 to 4,000 m/min, preferably 2,500 to 3,700 m/min.

Meanwhile, since the polyester fiber of the present invention exhibits high strength, low modulus and high elongation, it may be appropriately used for various industrial materials such as fiber for fishing net or fiber for rubber reinforcement such as a seat belt, a tire cord, a hose, a tube, and the like. The present invention provides a seat belt including the polyester fiber.

Particularly, beaming and weaving processes may be conducted using the polyester fiber of the present invention as weft and warp to manufacture a seat belt, and the like. The seat belt may be manufactured using a common narrow width weaving machine, but the weaving machine is not specifically limited. However, when weaving in the form of plain weave, Rapier Loom, Air Jet Loom, or Water Jet Loom, and the like may be used.

The seat belt, and the like manufactured using the polyester fiber of the present invention may have breaking strength retention of 85% or more, preferably 90% or more, more preferably 95% or more, as measured by evaluation of abrasion resistance with hexagonal bars. And, it may have tensile strength of 2,950 kgf or more, preferably 3,000 kgf or more, more preferably 3,050 kgf or more, as measured by evaluation of abrasion resistance with hexagonal bars. Since the seat belt exhibits excellent abrasion resistance as explained above, it may effectively perform functions for minimizing property degradation even with long time use, and holding a passenger when an accident occurs.

And, the seat belt may have heat resistant breaking strength retention of 85% or more, preferably 90% or more, more preferably 95% or more. In general, a seat belt is made into a product by conducting a dyeing process under high temperature environment. In this case, if the existing polyester fiber is used, to adjust elongation of fabric for dyeing, 1%~20% shrinkage is progressed under high temperature condition of 200 °C or more. However, due to the shrinkage in the dyeing process, mechanical properties may be remarkably lowered compared to the grey fabric of the seat belt. In the present invention, since the polyester fiber has high strength, low modulus and high elongation properties, a dyeing process is progressed while drawing without shrinkage for adjusting elongation of fabric for dyeing, and thus, excellent mechanical properties may be secured, and even if a dyeing process is conducted under high temperature environment, properties of the fabric for dyeing may be maintained or improved due to excellent heat resistant breaking strength retention.

Meanwhile, the seat belt may have impact absorption rate of 45% or more, preferably 50% or more, more preferably 55% or more. The impact absorption rate may be measured by the rate of workload under unloading to workload under maximum loading. Since the seat belt of the present invention has improved impact absorption rate compared to the existing seat belt, it may minimize impact applied to a passenger when an accident occurs, and simultaneously prevent damage to the seat belt itself.

The matters other than those described above regarding the present invention can be added or deleted, if necessary. Thus, they are not specifically limited in the present invention.

[EFFECT OF THE INVENTION]

The present invention provides polyester fiber with optimized initial modulus, elongation, shrinkage, strength, and the like, having excellent mechanical properties, abrasion resistance, breaking strength retention, and the like.

Since the polyester fiber has optimized high strength, low modulus, and high elongation, it may remarkably lower shrinkage and achieve excellent mechanical properties, and simultaneously, secure excellent abrasion resistance, breaking strength retention, and impact absorption, and thus, it may secure high strength property so as to support a passenger with sufficient strength when a car crashes, and minimize impact to a passenger to safely protect a passenger.

[BRIEF DESCRIPTION OF THE DRAWINGS]

Fig. 1 schematically shows a manufacturing process of the polyester fiber according to one embodiment of the invention.
Fig. 2 schematically shows a device used for evaluation of abrasion resistance with a hexagonal bar of a seat belt comprising the polyester fiber according to one embodiment of the invention.
Fig. 3 shows an example of a load-elongation curve that may be used for evaluation of impact absorption performance of a seat belt comprising the polyester fiber according to one embodiment of the invention.

[BESTMODE FOR CARRYING OUT THE INVENTION]

Hereinafter, the Examples are provided to assist the understanding of the present invention but the following Examples are only for the illustration of the present invention and it is not intended that the scope of the present invention is limited in any manner by them.

Examples 1-5

Polyester polymer having a specific intrinsic viscosity was melt-spinned and cooled to prepare undrawn polyester yam, and then, the undrawn yam was heat treated while drawing at a specific draw ratio to manufacture polyester fiber. The intrinsic viscosity of the polyester polymer, and spinning speed and spinning tension, spinning temperature, draw ratio, and heat treatment temperature are as described in the following Table 1, and the other conditions are commonly used conditions for manufacturing polyester fiber.

[Table 1]

|  | Ex.1 | Ex. 2 | Ex. 3 | Ex. 4 | Ex. 5 |
|---|---|---|---|---|---|
| Intrinsic viscosity of chip (dl/g) | 1.05 | 1.07 | 1.12 | 1.18 | 1.2 |
| Spinning temperature (°C) | 283 | 290 | 293 | 295 | 295 |
| Draw ratio | 5.7 | 5.6 | 5.5 | 5.4 | 5.3 |
| Heat treatment temperature (°C) | 240 | 235 | 235 | 235 | 240 |

For the polyester fiber manufactured in Example 1-5, properties were measured as follows, and the results are summarized in the following Table 2.

1) Tensile Strength and Elongation at break

The tensile strength and elongation at break of the polyester yam were measured using universal testing machine (Instron). The length of the sample was 250 mm, tensile speed was 300 mm/min, and initial load was 0.05 g/d.

And, in the strength-elongation curve according to the measured tensile strength and elongation, elongation value (%) corresponding to each tensile strength (1.0 g/d, 5.0 g/d, 8.8 g/d) was confirmed, and strength (g/d) and maximum elongation (%) of the yam at maximum strength point were confirmed.

2) Initial Modulus

Young's modulus and strength and elongation were measured by ASTM D 885, each modulus at 1% and 2% elongation, namely, at a point where 1% and 2% elongated was shown in the following Table 2.

3) Dry Heat Shrinkage

It was measured under conditions of adding constant load of 0.01 g/d at 177 °C for 2 minutes using Testrite MK-V (a product of Testrite Co.).

4) Crystallinity

The density p of polyester fiber was measured at 25 °C according to density gradient column method using n-heptane and carbon tetrachloride, and the crystallinity was calculated according to the following Equation 1.

[Equation 1]

$$X_c (Crystallinity) = \frac{\rho_c (\rho - \rho_a)}{\rho (\rho_c - \rho_a)}$$

wherein, p is the density of the fiber, $\rho_c$ is the density of the crystal region ($\rho_c$ = 1.457 g/cm$^3$ in the case of PET), and $\rho_a$ is the density of the amorphous region ($\rho_a$ = 1.336 g/cm$^3$ in the case of PET).

5) Intrinsic Viscosity (IV)

Emulsion was extracted from the sample using carbon tetrachloride, and dissolved in OCP (Ortho Chloro Phenol) at 160±2 °C, and then, the viscosity of the sample was measured in a viscosity tube using automatic viscometer, and intrinsic viscosity (IV) of the polyester fiber was calculated according to the following Equation 2.

[Equation 2]

$$Intrinsic\ viscosity\ (IV) = \{(0.0242 \times Rel) + 0.2634\} \times F$$

$$Rel = (seconds\ of\ solution \times specific\ gravity\ of\ solution \times viscosity\ coefficient)\ /\ (OCP\ viscosity)$$

$$F = (IV\ of\ the\ standard\ chip)\ /\ (average\ of\ three\ IV\ measured\ from\ the\ standard\ chip\ with\ standard\ action)$$

6) Single yam fineness

9,000m yam was taken using a reel, and weighed to obtain total fineness (Denier) of the yam, which is divided by the number of filaments to calculate single yam fineness.

[Table 2]

|  | Ex.1 | Ex. 2 | Ex. 3 | Ex. 4 | Ex. 5 |
|---|---|---|---|---|---|
| Crystallinity (%) | 48.4 | 47.2 | 47.5 | 48.2 | 47.9 |
| Intrinsic viscosity of yam (dl/g) | 0.85 | 0.88 | 0.92 | 0.97 | 1.01 |
| Initial modulus (g/d) | 94 | 88 | 79 | 73 | 66 |
| Tensile strength (g/d) | 9.3 | 9.2 | 9.2 | 8.8 | 9.1 |
| Elongation at break (%) | 14 | 16 | 17 | 18 | 19 |
| Dry heat shrinkage (%) | 5.7 | 5.8 | 6.5 | 7.4 | 7.8 |
| Single yam fineness (de) | 10.41 | 10.83 | 8.3 | 10.41 | 11.6 |
| Total fineness (de) | 1500 | 1300 | 1000 | 1000 | 800 |
| Elongation(%) at 1.0g/d stress | 0.7 | 0.84 | 0.88 | 0.94 | 1.1 |
| Elongation (%) at 4.0g/d stress | 6.0 | 6.5 | 7.1 | 7.6 | 8.5 |
| Elongation (%) at 7.0g/d stress | 7.2 | 7.3 | 8.1 | 9.2 | 10.4 |

Comparative Examples 1-5

Polyester fiber of Comparative Examples 1-5 was manufactured by the same method as Examples 1-5, except the conditions described in the following Table 3.

[Table 3]

|  | Com. Ex. 1 | Com. Ex. 2 | Com. Ex. 3 | Com. Ex. 4 | Com. Ex. 5 |
|---|---|---|---|---|---|
| Intrinsic viscosity of chip (dl/g) | 0.85 | 0.88 | 0.92 | 0.94 | 0.98 |
| Spinning temperature(°C) | 311 | 312 | 313 | 314 | 315 |
| Draw ratio | 6.05 | 6.0 | 5.95 | 5.9 | 5.85 |
| Heat treatment temperature (°C) | 220 | 220 | 220 | 210 | 210 |

Physical properties of the polyester fibers obtained from Comparative Examples 1-5 were measured in the same manner as specified above and summarized in the following Table 4.

[Table 4]

|  | Com. Ex. 1 | Com. Ex. 2 | Com. Ex. 3 | Com. Ex. 4 | Com. Ex. 5 |
|---|---|---|---|---|---|
| Crystallinity (%) | 42.8 | 42.9 | 42.5 | 42.3 | 42.2 |
| Intrinsic viscosity of yam (dl/g) | 0.60 | 0.65 | 0.70 | 0.85 | 0.88 |
| Initial modulus (g/d) | 110 | 107 | 104 | 103 | 101 |
| Tensile strength (g/d) | 8.5 | 8.3 | 8.2 | 8.0 | 8.3 |
| Elongation at break (%) | 10 | 11 | 12 | 12 | 12 |
| Dry heat shrinkage (%) | 9.5 | 9.2 | 9.1 | 9.3 | 8.9 |
| Single yam fineness (de) | 7.6 | 7.4 | 7.0 | 4.38 | 4.16 |
| Total fineness (de) | 1900 | 1850 | 1750 | 450 | 400 |
| Elongation (%) at 1.0g/d stress | 0.3 | 0.33 | 0.35 | 0.37 | 0.349 |
| Elongation (%) at 4.0g/d stress | 2.9 | 3.0 | 3.1 | 3.3 | 3.4 |
| Elongation (%) at 7.0g/d stress | 5.0 | 5.1 | 5.3 | 5.6 | 5.8 |

Preparations 1-5

Webbing was manufactured through a narrow width weaving machine using the polyester fiber prepared in Examples 1-5, and subjected to a dyeing process to manufacture a specimen of a seat belt, and the properties were measured as follows.

a) Evaluation of abrasion resistance by hexagonal bar

Abrasion resistance of the seat belt specimen by a hexagonal bar was measured as follows.

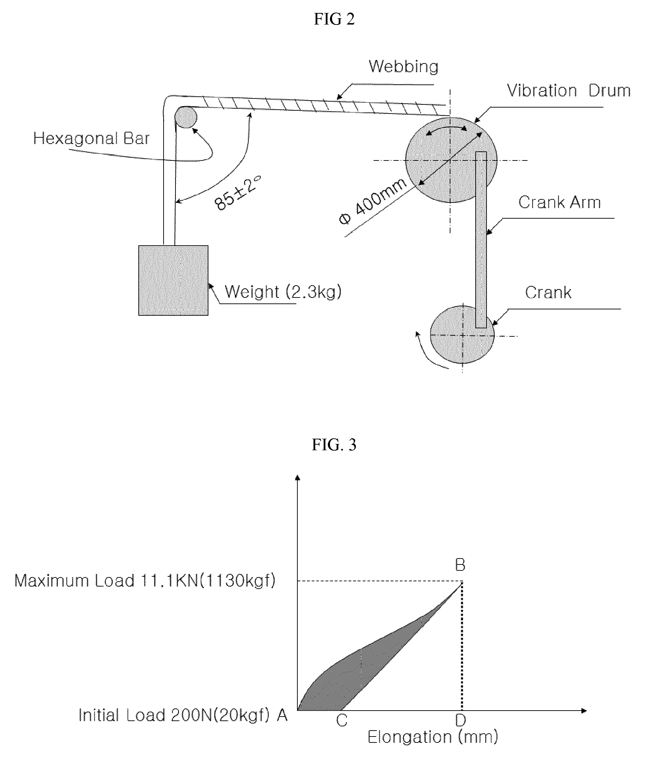

First, a seat belt specimen was attached to the testing device of Fig. 2, weight of 2.35±0.05 kg was suspended on one end of the specimen, and other end was fixed to a vibration drum across the hexagonal bar. The specimen was rubbed back and force 2,500 times at two angles of the hexagonal bar at 30±1 times every minute and distance of 330±30 mm, and then, tensile strength and breaking strength retention of the specimen were measured using universal testing machine (Instron). At this time, the angle of the hexagonal bar used once was not used again as it is.

Particularly, breaking strength retention of the seat belt specimen was measured according to ASTM D 2256, and tensile strength of the specimen was measured by standing the specimen at a temperature of 20±2 °C, relative humidity of 65%±2% for 24 hours, installing a clamp such that the distance between the clamps may become 220±20 mm, applying load so that tensile speed may become 100 mm per minute, and pulling the specimen until broken, and measuring tensile strength at break.

b) Evaluation of heat resistant breaking strength retention

Heat resistant breaking strength retention of the seat belt specimen was measured as follows.

First, tensile strength (T1) of the seat belt specimen was measured at grey fabric state before conducting a dyeing process, a dyeing solution was picked-up in a dyeing bath and heat treatment was conducted at a high temperature above 200 °C, and then, tensile strength (T2) was measured at dyed fabric state, and heat resistant breaking strength retention (%, T1/T2×100) was calculated as percent value of the strength of dyed fabric to the strength of grey fabric. Wherein, the tensile strength of the seat belt specimen was measured according to ASTM D 2256 as explained above.

c) Evaluation of impact absorption

Impact absorption of the seat belt specimen was measured as follows.

First, the seat belt specimen was allowed to stand at a temperature of 20±2 °C, relative humidity of 65%±2% for 24 hours, and then, a clamp was installed on the specimen such that the distance between the clamps may become 220±20 mm, load was applied such that tensile speed may become 100 mm per minute, and the load was decreased at the same speed as tension immediately when maximum load was reached at 1,130 kg(11.1 kN), to calculate load-elongation curve value as shown in Fig. 3.

Wherein, workload area (△ABD) in the tensile load curve from the initial load to the maximum load was divided by gauge length of the initial load to calculate workload per unit length. Also, workload area (△ABC) surrounded by the curve AB under tensile loading and the curve BC under unloading, to calculate workload ratio (%) corresponding to impact absorption rate according to the following Equation 3.

$$[\text{Equation 3}]$$

$$\text{Workload ratio} = (\triangle\text{ABC}/\triangle\text{ABD})\times100$$

The measurement results of the properties of the seat belt manufactured using the polyester fiber prepared in Examples 1-5 were shown in the following Table 5.

[Table 5]

| | | Preparation 1 | Preparation 2 | Preparation 3 | Preparation 4 | Preparation 5 |
|---|---|---|---|---|---|---|
| Evaluation of abrasion resistance | Breaking strength retention(%) | 95.2 | 95.8 | 96.5 | 97.8 | 98.5 |
| | Tensile strength(kgf) | 3,150 | 3,200 | 3,170 | 3,150 | 3,210 |
| Heat resistant breaking strength retention(%) | | 101 | 103 | 103 | 105 | 110 |
| Impact absorption rate/workload ratio(%) | | 63 | 64 | 67 | 68 | 70 |

Comparative Preparations 1-5

Seat belt specimens were manufactured by the same method as Preparation Examples 1-5, except using the polyester fiber prepared in Comparatives Example 1-5, and the properties were measured and shown in the following Table 6.

[Table 6]

| | | Com. Preparation 1 | Com. Preparation 2 | Com. Preparation 3 | Com. Preparation 4 | Com. Preparation 5 |
|---|---|---|---|---|---|---|
| Evaluation of abrasion resistance | Breaking strength retention(%) | 78.2 | 79.8 | 80.5 | 79.8 | 81.5 |
| | Tensile strength(kgf) | 2,880 | 2,910 | 2,930 | 2,890 | 2,915 |
| Heat resistant breaking strength retention(%) | | 82 | 83 | 84 | 80 | 84 |
| Impact absorption rate/workload ratio(%) | | 32 | 34 | 41 | 43 | 44 |

As shown in the Table 5, the seat belts of Preparation Examples 1-5, which were manufactured from the polyester fiber of Examples 1-5 having high intrinsic viscosity and elongation and low initial modulus, and the like, have breaking strength retention of 95.8% to 98.% after evaluation of abrasion resistance, and tensile strength of 3,150 to 3,210 kgf, and have very excellent heat resistant breaking strength retention of 100% or more after conducting a dyeing process under high temperature condition of 200 °C or more. And, the seat belts of Preparation Examples 1-5 have excellent impact absorption rate of 63% to 70%, thus confirming excellent impact resistance, breaking strength retention, and the like.

To the contrary, as shown in the Table 6, the seat belts of Comparative Preparation Example 1-5, which were manufactured using the polyester fiber of Comparative Examples 1-5, do not satisfy these properties. Particularly, breaking strength retention of the seat belts of Comparative Preparation Examples 1-5 was just 78.2% to 81.5% after evaluation of abrasion resistance, and the tensile strength was remarkably lowered to 2,880 to 2,930 kgf. Particularly, it can be seen that heat resistant breaking strength retention is 85% or less after conducting a dyeing process under high temperature condition of 200 °C or more. Also, it can be seen that impact absorption rate of the seat belts of Comparative Preparation Example 1-5 is remarkably lowered to 32% to 44%, and in this case, impact absorption may be lowered when an accident occurs to cause injury to a passenger. Particularly, as explained above, since breaking strength retention of the seat belts of Comparative Preparation Examples 1-5 is remarkably lowered, the properties may be rapidly lowered when used for a long time, and thus, it may not protect a passenger when an accident occurs.

**Claims**

1. A polyester fiber having elongation of 0.4% or more at stress of 1.0 g/d, elongation of 3.5% or more at stress of 4.0 g/d, and elongation of 6.0% or more at stress of 7.0 g/d, as measured at room temperature.

2. The polyester fiber according to Claim 1, which total fineness is 400 to 1,800 denier.

3. The polyester fiber according to Claim 1, wherein single yam fineness is 8.0 DPF or more, and the number of filaments is 50 to 240.

4. The polyester fiber according to Claim 1, wherein intrinsic viscosity is 0.8 dl/g or more.

5. The polyester fiber according to Claim 1, wherein tensile strength is 8.8 g/d or more, elongation at break is 13% or more, and dry heat shrinkage is 9% or less.

6. A method for preparing the polyester fiber according to any one of Claims 1 to 5, including the steps of:

   melt spinning polyester polymer having intrinsic viscosity of 1.0 dl/g or more at 270 to 310 °C to prepare undrawn polyester yam, and
   drawing the undrawn polyester yam.

7. The method according to Claim 6, wherein the drawing process is carried out with a drawing ratio of 5.0 to 6.0.

8. The method according to Claim 6, wherein the polyester polymer comprises at least one inorganic additive selected from the group consisting of $TiO_2$, $SiO_2$, and $BaSO_4$.

9. The method according to Claim 8, wherein the inorganic additive is included in the content of 100 to 1,200 ppm, based on the polyester polymer.

10. A seat belt comprising the polyester fiber according to any one of Claims 1 to 5.

11. The seat belt according to Claim 10, wherein the breaking strength retention of the seat belt is 85% or more.

12. The seat belt according to Claim 10, wherein the impact absorption rate of the seat belt is 45% or more.

FIG. 1

FIG 2

FIG. 3